Europäisches Patentamt

European Patent Office

Office européen des brevets

(11) Publication number: **0 288 787 B1**

(12) **EUROPEAN PATENT SPECIFICATION**

(45) Date of publication of patent specification: **19.01.94**  (51) Int. Cl.⁵: **C08L 71/12**, C08K 7/14, C08J 5/04

(21) Application number: **88105453.0**

(22) Date of filing: **06.04.88**

(54) **Modified glass reinforced polyphenylene ether resin composites having ductile mode of tensile failure.**

(30) Priority: **28.04.87 US 43289**

(43) Date of publication of application:
**02.11.88 Bulletin 88/44**

(45) Publication of the grant of the patent:
**19.01.94 Bulletin 94/03**

(84) Designated Contracting States:
**DE FR GB IT NL**

(56) References cited:
**EP-A- 0 244 585**      **WO-A-85/05372**
**WO-A-87/00540**      **WO-A-87/00850**
**FR-A- 2 212 379**      **US-A- 3 708 455**

(73) Proprietor: **GENERAL ELECTRIC COMPANY**
**1 River Road**
**Schenectady New York 12305(US)**

(72) Inventor: **Abolins, Visvaldis**
**15 Haddington Lane**
**Delmar New York 12054(US)**
Inventor: **Chambers, Gregory Robert**
**17 Parkwyn Drive**
**Delmar New York 12158(US)**

(74) Representative: **Pratt, Richard Wilson et al**
**London Patent Operation**
**G.E. Technical Services Co. Inc.**
**Essex House**
**12/13 Essex Street**
**London WC2R 3AA (GB)**

## Description

Polyphenylene ether resin compositions having bonding-type glass reinforcement exhibit high modulus necessary for large part molding and are improved with respect to the mode of tensile failure by replacement of conventional impact modifying agents with a core-shell impact modifier comprising a crosslinked acrylate core surrounded and interpenetrated by a crosslinked styrene shell.

Polyphenylene ether resins have long been recognized as useful thermoplastic materials for a wide range of applications. Such polyphenylene ether compositions have superior physical, electrical, and thermal properties, as well as excellent hydrolytic and dimensional stability.

Polyphenylene ether compositions are combinable with alkenyl aromatic compositions (such as polystyrene) in virtually all proportions and have been improved by the addition of various impact modifiers when additional impact strength is desired. In post published EP-A-244585 it was shown that polyphenylene ether resin molding compositions could be improved by the replacement of conventional impact modifying agents (such as natural or synthetic rubber compounds including butadiene rubber, EPDM rubber, and di- and triblock copolymers of styrene and butadiene and the like) with a core-shell type modifying agent which will be described in further detail below. WO 85/05372 discloses compositions comprising a combination of and/or the reaction product of a polyphenylene ether, a polyamide and an aliphatic polycarboxylic acid or derivative thereof, optionally containing modifier resins including styrenic resins and core-shell polymers having an acrylate rubbery core and a styrene shell and reinforcing additives such as glass fibres either untreated or treated with a coupling agent. Impact sensitive compositions are typically not glass reinforced to any significant degree since the higher modulus glass-reinforced compositions tend to be rather brittle and not particularly suited for conventional impact modification.

It has now been surprisingly discovered that small but effective amounts of a core-shell type impact modifying agent can be utilized to improve the mode of tensile failure for large molded parts of polyphenylene ether resin composites.

In general, glass reinforcement of polyphenylene ether resin molding compositions increases the stiffness as well as the tensile and flexural strength of the molding material. In order to maximize the increases in these properties, glass fiber reinforcement depends in great measure upon the sizing utilized on the glass fiber. Such glass sizing is typically a proprietary formulation utilized by each of the glass fiber manufacturers. However, it is to be noted that the glass sizing for reinforcing fibers can generally be categorized as bonding or non-bonding type fibers. Those skilled in the art will recognize that bonding-type glass fibers typically will have an affinity toward the resin in the thermoplastic matrix in which they are combined. Such glass reinforcement is considered to have good wetting or good bonding properties. Glass reinforcing fibers having maximum affinity for the matrix exhibit the greatest improvements in physical strength.

Thermoplastic molding compositions used in large part molding often contain a significant amount of flow promoting agents. The strength and stiffness of such molding resins is affected only slightly but the impact resistance of such composites is often reduced. Such a material is sometimes designated as being brittle.

Small amounts of compatible conventional impact modifiers such as styrene-ethylene butylene-styrene triblock copolymer (SEBS) are added in order to reduce the brittleness of the molded thermoplastic so that a molded part can be easily removed from a molding tool without breakage or shattering. This is an extremely important property in a manufacturing setting where a high volume of molded thermoplastic parts are produced as quickly as possible. In the case of large molded parts a decrease in the brittleness of the high modulus part can be of significant benefit.

The present invention is based on the discovery that a ductile mode of tensile failure of a glass-reinforced polyphenylene ether resin composite can be provided by combining a bonding type glass reinforcement and a particular core-shell type impact modifier and can be shown to be an improvement over other molded compositions.

The tensile elongation of glass reinforced composites is known to be low and therefore a more meaningful method of determining the brittleness or ductility of glass reinforced composites has been selected. The accompanying graphs exhibit the observed stress/strain curve to fracture for several tensile specimens. It will be seen that a brittle composite will show a sharp fracture point whereas a ductile composite will show a gradual fracture.

Such tensile stress is typical of the stress induced upon a molded part when removing a large part from the tool in which it was manufactured. Such removal often requires slight bending of the molded part at a low speed. It is therefore seen that this type of ductility is an important, if not essential, physical property of a polyphenylene ether resin composite.

Previously, the only known way to achieve the above-described improvement in ductile response to tensile failure has been the utilization of a so-called non-bonding glass reinforcement in the polyphenylene ether resin composite. As distinguished from the bonding glass described above, such non-bonding glass reinforcement has a relatively poor affinity toward the resin matrix and consequently exhibits poor wetting and low bond strengths toward the resin matrix. It is believed that the relatively poor bond strength between the glass reinforcement and the resin matrix contributes to a ductile mode of tensile failure for such composites. However, it is to be noted that the tensile strength, flexural strength, as well as the DTUL of the resulting composite are also typically lower and unsatisfactory.

When a bonding-type glass reinforcing agent is used in the same polyphenylene ether resin molding composite, the aforementioned physical properties such as tensile strength, impact strength, DTUL and channel flow can be improved; but, as previously noted, the tensile fracture is of the brittle type.

The polyphenylene ether resin composite of the invention will provide satisfactory tensile and impact strength, DTUL, channel flow and other physical properties as well as exhibit the ductile mode of tensile failure especially required for large molded parts.

These improvements are achieved when a polyphenylene ether resin molding composition is combined with both a bonding-type glass reinforcement as well as an effective amount of a core-shell impact modifying agent comprised of a cross-linked acrylate core and which is surrounded and interpenetrated by a crosslinked styrene shell.

A polyphenylene ether resin composite having improved ductile response to tensile failure is especially useful for large part molding applications and is based upon 100 parts by weight of a polyphenylene ether resin matrix. The resin matrix is comprised of an intimate admixture of polyphenylene ether resin, a polystyrene optionally modified with a polybutadiene rubber or an EPDM-rubber and an optional melt flow promoting amount of crystalline hydrocarbon resin comprised of a mixture of styrenic and olefinic monomers. The polyphenylene ether resin is preferably poly(2,6-dimethyl-1,4-phenylene)ether and will typically have an intrinsic viscosity greater than 0.10 dl/gm as measured in chloroform at 25°C.

The preferred polystyrene resin is rubber modified polystyrene, also known as high impact polystyrene. The weight ratio of polyphenylene ether : polystyrene can vary between wide limits but will typically range from 95:5 to 5:95 on a weight basis. The weight ratio of the optional flow promoting hydrocarbon resin : to the combination of polyphenylene ether/polystyrene compounds taken together will range from 0.1 to 0.3:1. The composite of the invention is reinforced with bonding-type glass fiber reinforcement. Bonding-type glass fibers exhibit affinity toward the resin matrix, principally due to the glass sizing. So-called non-bonding glass is sized differently and does not exhibit such affinity toward the resin matrix. This affinity, or lack thereof, is easily determined by examining, with a microscope, the fracture surface of a molded part after impact testing. It has been found that composites of the invention must contain greater than 13 parts by weight bonding type glass reinforcement (i.e. greater than about 10 parts per hundred weight resin) since all composites having less glass will show the requisite ductility due to the preponderance of the thermoplastic resin in the matrix at such glass loading levels. Greater than 50 parts bonding-type glass will typically be unsatisfactory due to difficulties in processing such composites on conventional compound equipment. Preferred composites will contain 20 to 30 parts by weight bonding-type glass reinforcement per hundred weight resin. The improvement in ductile response to tensile failure is achieved by combining the foregoing components with 0.5 to 10 parts by weight and preferably at least 2 parts by weight per hundred weight resin, of a core-shell type impact modifier comprised of a crosslinked acrylate core and an interpenetrating, crosslinked styrene shell. Small amounts of core-shell modifier will generally be effective for purposes of the present invention. The upper limit for utilizing the rubbery core-shell modifier will generally be determined by the degree of modulus required in the molded thermoplastic part. The integrity of the core-shell structure is maintained by the interpenetration and entanglement of the crosslinked components rather than by grafting. The preferred core-shell modifier will have a crosslinked butyl acrylate core comprising 40 to 90 weight percent of the core-shell structure; the preferred shell component comprising the difference is crosslinked polystyrene.

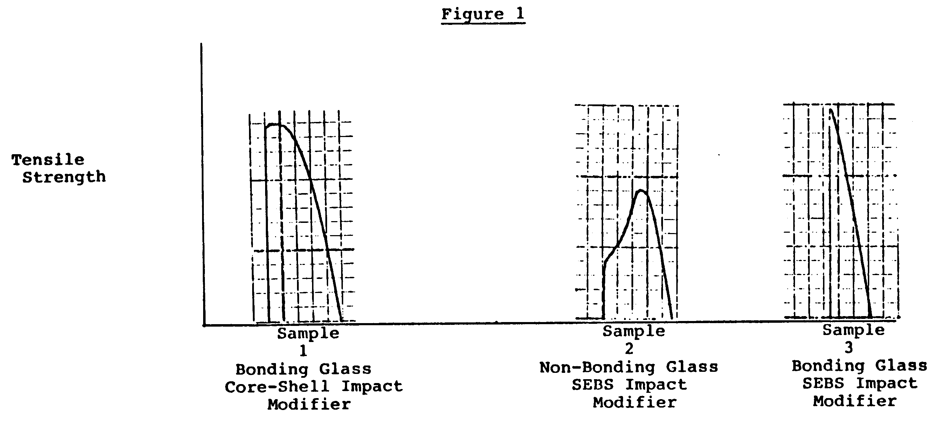

Figure 1 depicts the stress-strain curves for polyphenylene ether composites prepared in accordance with the examples below. The tensile strength is measured in MPa (PSI). The shape of the curve tends to indicate the mode of failure. Thus, the sharp break observed for Sample 3 is indicative of a brittle mode of failure whereas the blunter, gently curved plots for sample 1 and 2 is indicative of a ductile mode of failure in which the sample undergoes gradual yield.

Sample 1, which is a composition in accordance with the invention exhibits a good combination of high tensile strength as well as good ductility.

Polyphenylene ethers are a well known class of compounds sometimes referred to as polyphenylene oxides. Examples of suitable polyphenylene ethers and processes for preparation can be found in US-A-

3

3,306,874; 3,306,875; 3,257,357; and 3,257,358. Compositions of the present invention will encompass homopolymers, copolymers and graft copolymers obtained by the oxidative coupling of phenolic compounds.

A particularly useful polyphenylene ether would be poly(2,6-dimethyl-1,4-phenylene ether) having an intrinsic viscosity (I.V.) greater than, approximately 0.10 dl/g as measured in chloroform at 25°C. The I.V. will typically be between 0.30 and 0.50 dl/g. PPE having high glass transition temperatures will ordinarily improve the stiffness of the resin compositions.

The polystyrene resins useful in the present invention are well-known and available from a variety of commercial sources. The rubber-modified polystyrene (HIPS) is provided by combining or grafting polybutadiene-rubber or an EPDM-rubber with polystyrene.

The core-shell interpolymer modifiers which provide the necessary improvement in ductility, are those having a crosslinked acrylate rubber core, such as butyl acrylate. Surrounding this crosslinked core is a shell-like structure of crosslinked styrene, which surrounds and interpenetrates the crosslinked core. Incorporation of small amounts of other monomers such as acrylonitrile and/or methyl methacrylate with styrene in the shell can also provide useful products if the resulting copolymer shell does not cause significant incompatibility with the polyphenylene ether matrix. The integrity of such preferable core-shell structures is maintained by the interpenetrating network of the several crosslinked moieties rather than by grafting the structures together. The interpenetrating network is provided when the monomers forming the shell structure are polymerized and crosslinked in the presence of the previously polymerized and crosslinked acrylate core.

The core-shell interpolymer compositions may be formed by the following type of two-step, sequential polymerization process:

1. emulsion polymerizing an acrylate monomer charge (herein designated "acrylate", for purposes of the present invention), of at least one $C_2$-$C_{10}$ alkyl acrylate, $C_8$-$C_{22}$ alkyl(meth)acrylate, or compatible mixtures thereof, in an aqueous polymerization medium in the presence of an effective amount of a suitable di- or polyethyleneically unsaturated crosslinking agent for such type of monomer, with the $C_4$-$C_8$ alkyl acrylates being the preferred acrylate monomers for use in this step;

2. emulsion polymerizing a monomer charge of styrene in an aqueous polymerization medium, also in the presence of an effective amount of a suitable di-or polyethyleneically unsaturated crosslinking agent for such monomers, said polymerization being carried out in the presence of the product from Step 1 so that the crosslinked (meth)acrylate and crosslinked styrene components form an interpolymer wherein the respective phases surround and penetrate one another.

Such a two-stage polymerization process is analogous to the three step process for producing an acrylate-styrene-acrylonitrile (ASA) terpolymer, as taught by US-A-3,944,631.

This core-shell product generally comprises from about 40% to about 90%, by weight, of at least one of the above-identified crosslinked acrylates, and from about 10% to about 60%, by weight, of the crosslinked styrene component. It contains little graft polymerization between the crosslinked styrenic copolymer components and the crosslinked acrylate polymeric component. In the preferred embodiments, the core will comprise 50 to 80 weight percent crosslinked acrylate, based on the weight of crosslinked core and crosslinked shell taken together. Further details regarding this type of polymer composition can be found in the aforementioned US-A-3,044,731. The core-shell interpolymer provided by the foregoing process can be isolated and dried by conventional means and can be provided in powder or pellet form.

As noted, polyphenylene ether resin composites of the present invention are useful in large-part molding applications such as automotive instrument panels. Therefore, from a processing standpoint, such composites will typically benefit from flow promoting additives which facilitate the filling of large molding tools. A preferred flow promoting additive for such applications is a crystal polystyrene based additive, as distinguished from rubber modified, high impact polystyrene which is also utilized in the composite formulation. A preferred flow promoting additive is a low molecular weight hydrocarbon resin comprising a mixture of styrenic and olefinic monomers. Such a hydrocarbon resin, having a molecular weight of about 1200 as measured by ASTM D-2503 is known as PICCO 5140 and is commercially available from Hercules, Inc. The production and composition of this type of petroleum hydrocarbon resin is described in the Encyclopedia of Polymer Science and Technology, Vol. 9, p.853, 1968, John Wiley and Sons, N.Y.

Glass manufacturers do not disclose the chemistry of the materials which constitute the glass sizing of their fibers. Glass sizing may encompass a proprietary binder, coupling agent, lubricant and antistat agent. For this reason, the affinity between the glass fibers and the resin is not described in terms of chemistry. However, the "bonding" or "non-bonding" characteristics of the glass fibers can be easily observed when inspecting the fractured surfaces of the composite. This observation can be best done under the microscope. A composite containing "non-bonding" glass shows numerous, relatively long, essentially resin-free glass filaments. The fractured surface of a composite containing "bonding" glass shows relatively short, resin covered glass filaments. The length of the glass fibers may also influence the impact behavior of the composite. As a rule, longer fibers are desirable.

The foregoing constituent ingredients can be compounded and molded by conventional means. The order of mixing and degree of shear experienced during extrusion can be varied. It would be expected that the physical properties could vary as such processing conditions are varied. Those skilled in the art will be able to achieve optimum processing conditions which may vary for different thermoplastic applications.

Thus in one instance, each of the ingredients could be blended and extruded at once, thereby providing thermoplastic resin having a particular property profile. Alternatively it may be desirable to pre-blend or precompound some of the ingredients while the remaining ingredients are charged later in a compounding or extrusion process. Conventional single or twin screw extrusion technology may be utilized.

In an alternative embodiment, the polyphenylene ether could be compounded with the core-shell interpolymer impact modifier. Thereafter, the polystyrenic resin and optional hydrocarbon flow promoter and bonding type glass could be charged to the extruder downstream, at a point sufficient to provide adequate mixing but with minimum risk of degradation due to excess shear or heat.

Additionally, it is expected that conventional additives such as additional fillers, pigments, stabilizers, lubricants plasticizers and flame retarding compounds can be incorporated in the thermoplastic compositions of the present invention, thereby providing a variety of useful products. For fillers, both reinforcing and non-reinforcing fillers may be suitable in certain instances including clay and other mineral fillers. Conventional heat and oxidative stabilizers may be used. Among the useful flame retarding compounds which may be utilized are organic and inorganic halogen and phosphorus compounds with or without synergists such as, for example, antimony trioxide.

Specific embodiments of the present invention are taught in the following examples which are not limiting in any way. All parts are by weight unless otherwise indicated.

Synthesis of Core-Shell Additives

Preparation A: crosslinked core/crosslinked styrene shell

A crosslinked polybutylacrylate core having an interpenetrating, crosslinked polystyrene shell can be prepared in a five liter, three-necked flask equipped with a heating/cooling jacket, a Teflon blade agitator, a thermometer and a nitrogen purge. Yields indicated at each step are those expected, based upon prior synthesis of the core-shell additive.

The following solutions are prepared:

| Solution A: | n-butyl acrylate<br>1-3 butyleneglycol diacrylate | 751.4 g<br>1.27 g |
|---|---|---|
| Solution B: | Sodium Metabisulfite<br>deionized water | 1.75 g<br>27.4 g |
| Solution C: | Ammonium Persulfate<br>deionized water | 4.84 g<br>76.1 g |
| Solution D: | styrene<br>divinyl benzene (55% active solution from Dow Chemical) | 250.6 g<br>2.65 g |

Into the reaction flask is charged: 3,460 g deionized water, the following emulsifying agents: 2.1 g Sipex UB sodium lauryl sulfate (from Alcolac, Inc.) and 4.2 g Aerosol A-268, a disodium sulfosuccinate (from American Cyannamid), and 14.6 g of Solution B. The flask is stirred with $N_2$ sparge at room temperature for 30 minutes, to reduce the $O_2$ content.

Thereafter, 150.5 g of $N_2$ sparged Solution A is added. The flask contents are heated to 55°C and then 13.5 g of Solution C are added to initiate polymerization.

After 1.5 hours of reaction, a sample is expected to show about 4.1% resin solids indicating approximately 96% conversion. The remainder of solution A as well as 14.6 g Solution B and 40.4 g Solution C are added. After 2.5 hours of additional reaction time at 55°C a sample is expected to show about 17.2% resin solids, indicating greater than 97% conversion.

The reaction mixture is cooled to 35°C and Solution D is added and mixed for 15 minutes at 35°C.

The reaction mixture is then heated to 60°C and the remainder of Solution C is added. The mixture is reacted for 1.25 hours. The temperature is raised to 75°C and maintained for 45 minutes. A final sample is expected to show about 22.4% resin solids indicating a conversion greater than 98%.

The product latex is coagulated in a solution of 0.25 weight percent $CaCl_2$ in methanol at a rate of 1600 ml methanol per 800 ml latex. The coagulum is filtered, rinsed with fresh methanol, and dried in a vacuum oven at 60°C.

The product has a rubber content of 75% by weight, a number average latex particle diameter of 211 nanometers, a swell index in methyl ethyl ketone (MEK) of 8.1 and a percent Gel fraction from MEK extraction of 91.1%.

EXAMPLE 1

Several glass reinforced polyphenylene ether resin molding composites were provided in the following manner where all parts indicated are by weight of each component. A Werner & Pfleiderer 28mm twin screw extruder was utilized to compound the formulations which had been previously blended. Extrusion was accomplished at a melt temperature of approximately 299°C (570 °F) followed by quenching of the extrudate in water and pelletizing of the composite. Test specimens of the composition were molded on a 113.4g (4 ounce) Newbury injection molding machine having a melt temperature of approximately 288°C (550 °F). Physical properties are reported in Table I.

Each of the composite formulations was comprised of 38 parts polyphenylene ether resin, 46 parts high impact polystyrene, 20 parts of the bonding or non-bonding glass reinforcement, 2 parts of the core-shell modifier or 2 parts of an SEBS triblock copolymer modifier and 16 parts of a low molecular weight mixture of styrene and olefinic monomers utilized as a flow promoter.

In addition, each composition contained as processing aids: 1.5 parts polyethylene, 0.5 part tridecyl phosphite, 0.15 part ZnS, 0.15 part ZnO, 1.5 parts mineral oil, and 2 parts Hostastat HS-1 sodium salt of $C_4$-$C_8$ alkyl sulfonate.

The major constituents are more particularly identified as follows:

Polyphenylene Ether - poly(2,6-dimethyl-1,4-phenylene ether) having an intrinsic viscosity of approximately 0.4 dl/gm as measured in chloroform at 25°C.

High Impact Polystyrene: Huntsman 1897 rubber modified polystyrene.

Low molecular weight flow promoter: Hercules Picco Resin grade 5140.

SEBS Modifier - Kraton G 1650, styrene-ethylene butylene-styrene triblock copolymer (partially hydrogenated triblock elastomer), Shell Chemical.

Core-Shell Modifier - crosslinked butyl acrylate core, surrounded and interpenetrated by a crosslinked polystyrene shell, made in accordance with preparation A, above.

Bonding Glass Reinforcement - chopped glass fibers, OCF grade 497, Owens Corning Fiberglas.

Non-bonding Glass - chopped glass fibers, Manville grade NR-E.

EP 0 288 787 B1

## Table 1

| Properties | Sample 1 | Sample 2* | Sample 3* | Sample 4* |
|---|---|---|---|---|
| Tensile Strength (psi) MPa | (9,800) 67.62 | (7,900) 54.51 | (10,000) 69 | (7,900) 54.51 |
| Elongation (%) | 7.2(Ductile) | 8.1(Ductile) | 6.0(Brittle) | 7.2(Ductile) |
| Izod Impact Strength (ft.lb/in.n) J/m at RT | (1.5) 81 | (1.1) 59.4 | (1.3) 70.2 | (1.1) 59.4 |
| at (-20°F) -29°C | (1.1) 59.4 | (0.6) 32.4 | (1.0) 54 | (0.5) 27 |
| Dynatup Impact Strength (in-lbs) Nm at RT | (149) 16.39 | (91) 10.01 | (109) 11.99 | (130) 14.3 |
| at (-20°F) -29°C | (104) 11.44 | (65) 7.15 | (88) 9.68 | (74) 8.14 |
| Flexural Strength (psi) MPa | (14,500) 100.05 | (11,400) 78.66 | (14,500) 94.5 | (10,400) 71.76 |
| Flexural Modulus (psi) MPa | (599,000) 4133.1 | (628,000) 4333.2 | (626,000) 4319.4 | (573,000) 3953.7 |
| Channel Flow at 288°C(550°F) and 69 MPa(10,000 psi) | (25½") 64.8cm | (26") 66.0cm | (27") 68.6cm | (27½") 74.3cm |
| DTUL (F) °C | (247°) 119 | (243°) 117 | (244°) 118 | (238°) 114 |
| GLASS TYPE | BONDING | NON-BONDING | BONDING | NON-BONDING |
| RUBBER TYPE | CORE-SHELL | SEBS | SEBS | CORE SHELL |

*Comparative Samples

EXAMPLE 2

Glass reinforced polyphenylene ether resin composites were prepared in the same manner as described for Example 1 above except each contained 27 parts by weight (approximately 20 weight percent) of the indicated glass fiber reinforcement.

Table 2

| Physical Properties | Sample 5 | Sample 6* | Sample 7* |
|---|---|---|---|
| Tensile Strength (psi) MPa | (10,500)72.45 | (7,900)54.51 | (10,200)70.38 |
| Elongation % | 6.7(Ductile) | 5.7(Ductile) | 6.2(Brittle) |
| Izod Impact Strength @ (ft.lb./in.n) J/m | (1.3)70.2 | (1.2)64.8 | (1.4)75.6 |
| Izod Impact Strength @ (-20°F(ft.lb./in.n) -29°C J/m | (1.1)59.4 | (0.9)48.6 | (1.2)64.8 |
| Dynatup Impact Strength @ RT (in-lbs) Nm | (160)17.6 | (154)16.94 | (143)15.73 |
| Dynatup Impact Strength @(-40°F(in-lbs)) -40°C Nm | (114)12.54 | (88)9.68 | (107)11.77 |
| Flexural Strength (psi) MPa | (15,800)109.02 | (11,300)77.97 | (15,000)103.5 |
| Flexural Modulus (psi) MPa | (784,000)5407.6 | (768,000)5299.2 | (740,000)5106 |
| Channel Flow @ 288°C(550°F) and 69 MPa(10,000 psi) | (25")63.5cm | (26")66.0cm | (25¼")64.8cm |
| Melt Viscosity @ 282°C(540°F) and 1500 sec. (poise) | -- | -- | -- |
| DTUL @ (264 psi (°F))1.82 MPa °C | (248°)120 | (248°)120 | (250°)121 |
| Glass Type | Bonding | Non-Bonding | Bonding |
| Rubber Type | Core-Shell | SEBS | SEBS |

*Comparative

Example 3

The foregoing examples were repeated utilizing a glass content of about 13 parts per hundred weight resin (approximately 10.7 weight percent). It will be seen from Table 3 that all four samples were ductile, nonetheless, the Composite of the invention containing both bonding type glass and core-shell modifier exhibited modest improvement in most other properties.

## Table 3

| Physical Properties | Sample 9 | Sample 10* | Sample 11* | Sample 12* |
|---|---|---|---|---|
| Tensile Strength (psi) MPa | (8,200) 56.58 | (7,200) 49.65 | (8,300) 57.27 | (7,300) 50.37 |
| Elongation % | 7.6(Ductile) | 10.4(Ductile) | 6.9(Ductile) | 8.5(Ductile) |
| Izod Impact Strength @ (ft.lb./in.n) J/m | (1.4) 75.6 | (1.4) 75.6 | (1.4) 75.6 | (1.2) 64.8 |
| Izod Impact Strength @ (-20°F(ft.lb./in.n) -29°C J/m | (0.8) 43.2 | (0.7) 37.8 | (0.8) 43.2 | (0.7) 37.8 |
| Dynatup Impact Strength @ RT (in-lbs) | (168) 18.48 | (151) 16.61 | (138) 15.18 | (174) 19.14 |
| Dynatup Impact Strength @ -40°F(in-lbs) | (126) 13.86 | (45) 4.95 | (89) 9.79 | (52) 5.72 |
| Flexural Strength (psi) MPa | (12,900) 89.01 | (10,900) 75.21 | (12,700) 87.63 | (11,000) 75.9 |
| Flexural Modulus (psi) MPa | (556,000) 3836.4 | (531,000) 3663.9 | (541,000) 3732.9 | (545,000) 3760.5 |
| Channel Flow @ 288°C and 69 MPa (550°F and 10,000 (psi)) | (26") 66.0 cm | (26 3/4")67.9cm | (26")66.0 cm | (264") 67.31 cm |
| Melt Viscosity @ 282°C(540°F) and 1500 sec. (poise) | -- | -- | -- | -- |
| DTUL @ (264 psi (°F)) 1.82MPa °C | (244°) 118 | (244°) 118 | (243°) 117 | (245°) 118 |
| Glass Type | Bonding | Non-Bonding | Bonding | Non-Bonding |
| Rubber Type | Core-Shell | SEBS | SEBS | Core-Shell |

*Comparative

9

## Claims

1. A thermoplastic resin composite having an improved ductile response to tensile failure comprising
   a. 100 parts by weight of a polyphenylene ether resin composition comprising, in intimate admixture, a polyphenylene ether resin, a polystyrene optionally modified with a polybutadiene rubber or an EPDM-rubber, and a flow promoting crystalline resin mixture comprising styrenic and olefinic monomers;
   b. 13 to 50 parts by weight of bonding-type reinforcing glass fibers; and
   c. at least 2 parts by weight of a core-shell type impact modifying agent comprising a crosslinked acrylate core and an interpenetrating, crosslinked styrene shell.

2. A composite as claimed in Claim 1 wherein said polyphenylene ether is poly(2,6-dimethyl-1,4-phenylene ether) having an intrinsic viscosity greater than 0.10 dl/g as measured in chloroform at 25°C.

3. A composite as in Claim 1 wherein said bonding-type reinforcing glass fibers are present in an amount of 20 to 30 parts by weight.

4. A composite as in Claim 1 wherein the weight ratio of polyphenylene ether resin : polystyrene resin ranges from 95:5 to 5:95.

5. A composite as in Claim 1 wherein the weight ratio of flow promoting resin : polyphenylene ether and polystyrene resins ranges from about 0.1-3:1.

6. A thermoplastic resin composite having an improved ductile response to tensile failure comprising
   a. 100 parts by weight of a polyphenylene ether resin composition comprising, in intimate admixture, a polyphenylene ether resin, and a polystyrene optionally modified with a polybutadiene rubber or an EPDM-rubber;
   b. 13 to 50 parts per hundred weight resin of bonding-type reinforcing glass fibers; and
   c. 0.5 to 10 parts per hundred weight resin of a core-shell type impact modifying agent comprising a crosslinked acrylate core and an interpenetrating, crosslinked styrene shell.

7. A composite as in Claim 6 wherein said polyphenylene ether resin is poly(2,6-dimethyl-1,4-phenylene ether) having an intrinsic viscosity of at least 0.10 dl/g as measured in chloroform at 25°C.

8. A composite as in Claim 6 wherein said bonding-type reinforcing glass fibers are present in an amount of 20 to 30 parts per hundred weight resin.

9. A composite as in Claim 6 wherein the weight ratio of polyphenylene ether resin : polystyrene resin ranges from 95:5 to 5:95.

## Patentansprüche

1. Thermoplastischer Harzverbundstoff mit verbessertem duktilem Verhalten bei Zug-Bruchversagen, enthaltend
   a. 100 Gewichtsteile einer Polyphenylenätherharz-Zusammensetzung enthaltend in inniger Mischung ein Polyphenylenätherharz, ein Polystyrol, fakultativ modifiziert mit einem Polybutadiengummi oder einem EPDM-Gummi und einer die Fließeigenschaften verbessernden kristallinen Harzmischung aus Styrol und Olefinmonomeren;
   b. 13 bis 50 Gewichtsteile verstärkende Glasfasern vom Bonding-Typ, und
   c. wenigstens 2 Gewichtsteile eines Schlagmodifizierungsmittels vom Kern-Mantel-Typ, enthaltend einen vernetzten Acrylatkern und einen interpenetrierenden vernetzten Styrolmantel.

2. Verbundstoff nach Anspruch 1, worin der Polyphenylenäther Poly(2,6-dimethyl-1,4-phenylen-äther) mit einer grundmolaren Viskositätszahl von mehr als 0,10 dl/g, gemessen in Chloroform bei 25°C, ist.

3. Verbundstoff nach Anspruch 1, worin die verstärkenden Glasfasern vom Bonding-Typ in einer Menge von 20 bis 30 Gewichtsteilen vorhanden sind.

**4.** Verbundstoff nach Anspruch 1, worin das Gewichtsverhältnis des Polyphenylenätherharzes zum Polystyrolharz im Bereich von 95 : 5 bis 5 : 95 liegt.

**5.** Verbundstoff nach Anspruch 1, worin das Gewichtsverhältnis des die Fließeigenschaften verbessernden Harzes zum Polyphenylenäther- und Polystyrolharz im Bereich von etwa 0,1 bis 3 : 1 liegt.

**6.** Thermoplastische Harzzusammensetzung mit verbessertem duktilem Verhalten bei Zug-Bruchversagen, enthaltend
   a. 100 Gewichtsteile einer Polyphenylenätherharz-Zusammensetzung enthaltend in inniger Mischung ein Polyphenylenätherharz und ein Polystyrol, fakultativ modifiziert mit einem Polybutadiengummi oder einem EPDM-Gummi;
   b. 13 bis 50 Teile pro 100 Teile des Harzgewichtes verstärkender Glasfasern vom Bonding-Typ, und
   c. 0,5 bis 10 Teile pro 100 Teile Harz eines Schlagmodifizierungsmittels vom Kern-Mantel-Typ, enthaltend einen vernetzten Acrylatkern und einen interpenetrierenden vernetzten Styrolmantel.

**7.** Verbundstoff nach Anspruch 6, worin das Polyphenylenätherharz Poly(2,6-dimethyl-1,4-phenylen-äther) mit einer grundmolaren Viskositätszahl von wenigstens 0,10 dl/g, gemessen in Chloroform bei 25°C, ist.

**8.** Verbundstoff nach Anspruch 6, worin die verstärkenden Glasfasern vom Bonding-Typ in einer Menge von 20 bis 30 Teilen pro 100 des Harzgewichtes vorhanden sind.

**9.** Verbundstoff nach Anspruch 6, worin das Gewichtsverhältnis des Polyphenylenätherharzes zum Polystyrolharz im Bereich von 95 : 5 bis 5 : 95 liegt.

**Revendications**

**1.** Matériau composite à résine thermoplastique, présentant une réponse ductile améliorée à la rupture en traction, et comprenant :
   a) 100 parties en poids d'une composition de résine de poly(phénylène éther) contenant, en un mélange intime, une résine de poly(phénylène éther), un polystyrène, éventuellement modifié avec un caoutchouc polybutadiène ou un caoutchouc EPDM, et une résine mixte cristalline favorisant l'écoulement et constituée de monomères styréniques et oléfiniques ;
   b) de 13 à 50 parties en poids de fibres de verte de renfort, de type liant ; et
   c) au moins 2 parties en poids d'un agent modifiant la résistance au choc, de type noyau-coque, constitué d'un noyau réticulé à base d'acrylate et d'une coque réticulée à base de styrène, qui s'interpénètrent.

**2.** Matériau composite conforme à la revendication 1, dans lequel ledit poly(phénylène éther) est du poly-(2,6-diméthyl-1,4-phénylène éther) dont la viscosité intrinsèque, mesurée dans du chloroforme à 25°C, est supérieure à 0,10 dl/g.

**3.** Matériau composite conforme à la revendication 1, dans lequel lesdites fibres de verte de renfort de type liant se trouvent en une quantité de 20 à 30 parties en poids.

**4.** Matériau composite conforme à la revendication 1, dans lequel le rapport pondéral de la résine de poly(phénylène éther) à la résine de polystyrène vaut de 95/5 à 5/95.

**5.** Matériau composite conforme à la revendication 1, dans lequel le rapport pondéral de la résine favorisant l'écoulement aux résines de poly(phénylène ether) et de polystyrène vaut d'environ 0,1/1 à 3/1.

**6.** Matériau composite à résine thermoplastique, présentant une réponse ductile améliorée à la rupture en traction, et comprenant :
   a) 100 parties en poids d'une composition de résine de poly(phénylène éther) contenant, en un mélange intime, une résine de poly(phénylène éther) et un polystyrène, éventuellement modifié avec un caoutchouc polybutadiène ou un caoutchouc EPDM ;

b) de 13 à 50 parties pour cent parties de résine, en poids, de fibres de verte de renfort, de type liant ; et

c) de 0,5 à 10 parties pour cent parties de résine, en poids, d'un agent modifiant la résistance au choc, de type noyau-coque, constitué d'un noyau réticulé à base d'acrylate et d'une coque réticulée à base de styrène, qui s'interpénètrent.

7. Matériau composite conforme à la revendication 6, dans lequel ladite résine de poly(phénylène éther) est du poly(2,6-diméthyl-1,4-phénylène éther) dont la viscosité intrinsèque, mesurée dans du chloroforme à 25°C, vaut au moins 0,10 dl/g.

8. Matériau composite conforme à la revendication 6, dans lequel lesdites fibres de verte de renfort de type liant se trouvent en une quantité de 20 à 30 parties pour cent parties de résine, en poids.

9. Matériau composite conforme à la revendication 6, dans lequel le rapport pondéral de la résine de poly(phénylène éther) à la résine de polystyrène vaut de 95/5 à 5/95.

Figure 1

**Tensile
Strength**

EP 0 288 787 B1

Sample
1
**Bonding Glass
Core-Shell Impact
Modifier**

Sample
2
**Non-Bonding Glass
SEBS Impact
Modifier**

Sample
3
**Bonding Glass
SEBS Impact
Modifier**